# EUROPÄISCHE PATENTSCHRIFT

(11) **EP 2 089 488 B1**
(45) Veröffentlichungstag und Bekanntmachung des Hinweises auf die Patenterteilung: **15.09.2010**
(21) Anmeldenummer: 07821819.5
(22) Anmeldetag: 25.10.2007
(51) Int. Cl.: C09J 7/02, C09J 7/04, B32B 27/32

(54) **TRÄGERMATERIAL INSBESONDERE FÜR EIN KLEBEBAND MIT EINEM TEXTILEN TRÄGER, WOBEI DER TEXTILE TRÄGER MIT EINER KUNSTSTOFFFOLIE EXTRUSIONSBESCHICHTET IST**
SUPPORT MATERIAL, ESPECIALLY FOR AN ADHESIVE TAPE COMPRISING A TEXTILE SUPPORT, SAID TEXTILE SUPPORT BEING COATED WITH A PLASTIC FILM
MATÉRIAU SUPPORT NOTAMMENT POUR UN RUBAN ADHÉSIF À SUPPORT TEXTILE, CE SUPPORT TEXTILE ÉTANT REVÊTU PAR EXTRUSION D'UN FILM PLASTIQUE

(30) Priorität: 10.11.2006 DE 102006053440
(43) Veröffentlichungstag der Anmeldung: 19.08.2009
(73) Patentinhaber: TESA SE, 20253 Hamburg (DE)
(72) Erfinder: KÜLPER, Klaus, 25421 Pinneberg (DE)
(86) Internationale Anmeldenummer: PCT/EP2007/061456
(87) Internationale Veröffentlichungsnummer: WO 2008/055789

(56) Entgegenhaltungen:
- EP-A- 0 336 727
- EP-A- 0 916 710
- DE-A1- 3 422 302

## Beschreibung

Die Erfindung bezieht sich auf ein Trägermaterial insbesondere für ein Klebeband, weiter bevorzugt Selbstklebeband mit einem textilen Träger, wobei der textile Träger mit einer Kunststofffolie extrusionsbeschichtet ist.

Gewebeklebebänder sind seit über 50 Jahren bekannt und finden in vielfältiger Weise Einsatz in unterschiedlichsten Anwendungen, nämlich technischen, medizinischen, künstlerischen und anderen. Diese werden auch als "General Purpose Cloth Tapes" (GP) bezeichnet. Vielfach handelt es sich bei dem Trägermaterial um beschichtetes Gewebe, das entweder mit einer Kunststoffpaste oder einer Art Kunststofffolie einseitig abgedichtet ist. Neben Geweben finden in letzter Zeit verstärkt auch andere textile Trägermaterialien wie Gewirke, Gelege und insbesondere Vliesstoffe Verwendung.

Ursprünglich aus den USA kommend hat sich eine bestimmte Produktart, die so genannten "Duct Tapes", weit verbreitet. Hier werden auf offene Gewebe oder Gewirke, deren Struktur eher dem eines weitmaschigen Netzes entspricht denn einem dicht gewebten Stoff, unter Verwendung einer Selbstklebemasse eine Polyethylen-Folie (PE) auflaminiert, wobei die der Folie abgewandte Seite des Textils zusätzlich eine weitere, dicke Schicht Selbstklebemasse trägt. Als Klebemasse werden stark klebrige Kautschukmassen bevorzugt, meist basierend auf Naturkautschuk oder Synthesekautschuken wie Styrol-Isopren-Styrol (SIS) oder Mischungen daraus. Diese Duct Tapes sind als Universalklebebänder für annähernd alle bekannten Anwendungen bekannt.

Ähnlich vom Produktaufbau sind Selbstklebebänder, die von Japan kommend mittlerweile nicht nur in Asien, sondern auch in Europa und Amerika starke Verbreitung gefunden haben. Ein im Vergleich zu den Duct Tapes etwas dicht-maschigeres Gewebe wird mit einer PE-Lage extrusionsbeschichtet. Hier bilden bei entsprechenden Verfahrensparametern das Gewebe und die PE-Schicht einen stabilen Verbund, der sich nur schwer trennen lässt. Auch hier erfolgt auf der der Folie abgewandten Seite des Gewebes eine Beschichtung mit einer dicken, meist Naturkautschuk basierten Selbstklebemasse. Derartige Selbstklebebänder wurden ursprünglich überwiegend als Verpackungsbänder in Japan eingesetzt, finden sich aber aufgrund der guten, universellen Eigenschaften auch in vielen anderen Verwendungen ebenfalls als eine Art GP-Klebeband.

Beiden Typen von textilen Selbstklebebändern, wobei der Begriff "textil" in diesem Kontext sowohl das am meisten genutzte Gewebe, aber auch alternative Optionen wie Gewirke, Gelege, Vliesstoffe oder andere textile Flächengebilde umfasst, gemeinsam ist die Notwendigkeit, die PE-Folie auf der der Klebemasse abgewandten Seite mit einem antiadhäsiven Mittel (im Folgenden als "Release" bezeichnet) zu versehen. Da derartige Klebebänder fast ausschließlich- als Rollenware von beispielsweise 50 Laufmeter auf Kernen von 1 bis 6 Zoll Durchmesser vertrieben werden, muss für die spätere Nutzung ein leichtes Wiederabrollen möglich sein. Da die verwendeten Kautschukklebemassen aber im Normalfall über die Zeit, unter Druck und/oder Temperatur stark auf die PE-Folie der nächsten Rollenlage aufziehen, würden die Abrollkräfte für eine gute Funktionalität viel zu hoch sein. Als Abhilfe ist es Stand der Technik, deshalb die PE-Folie auf ihrer Oberseite antiadhäsiv mit einem Trenn- oder Releaselack oder dergleichen auszurüsten.

Neben silikonhaltigen Lacken sind Systeme mit Fettsäurederivaten wie beispielsweise Polyvinylstearylcarbamate (PVSC) am häufigsten anzutreffen. Sie werden gelöst oder dispergiert in einem separaten Arbeitsschritt aufgetragen, getrocknet und bei Bedarf vernetzt. Für eine gute Benetzung und ausreichende Haftung des Lackes auf der Folienoberfläche, die unpolar ist und eine geringe Oberflächenspannung aufweist, wird häufig eine Corona-Behandlung vorgeschaltet. Flammen- oder Plasmabehandlungen sind auch prinzipiell möglich.

Da es sich bei den beschriebenen textilen Selbstklebebändern nicht um Spezialklebebänder, sondern eher um preisgünstige Massenprodukte handelt, sind die Material- und Herstellkosten möglichst niedrig zu halten. So erfordert die Releaselackierung einen eigenen Arbeitsschritt. Selbst wenn dieser im Idealfall inline zur Folienherstellung oder Beschichtung erfolgt, ist der investive Aufwand für die Lackier-, Corona- sowie Trocknungs- und Bestrahlungsanlagen erheblich; des Weiteren sind für die Herstellung beziehungsweise die Lagerung und den Transport der Lacke geeignete Anlagen zur Verfügung zu stellen; des Weiteren fallen erheblich Energiekosten für den laufenden Betrieb der Corona-, Trocknungs- und Bestrahlungsanlagen an.

In der US 4,705,715 A wird ein Gewebeband mit einer zweischichtigen Außenschicht beschrieben, wobei die eine Lage geschäumt ist. Als Werkstoff wird PE bevorzugt. Hinweise auf spezielle antiadhäsive Komponenten finden sich nicht.

Ähnlich verhält es sich gemäß der EP 0 410 674 A1 mit einem speziellen Maskierungsband, wo auf einen Vliesstoff zwei Lagen Polyethylen unterschiedlicher Dichte aufextrudiert werden. Auch hier fehlen Hinweise auf besondere antiadhäsive Verbindungen.

In WO 2004/061034 A1 werden für die bevorzugte Verwendung als Trennfolien ganz spezielle Kombinationen aus polymeren Werkstoffen und antiadhäsiven Komponenten beschrieben, die wie Schlüssel-Schloss-Systeme über eine geeignete Säure-Basen-Funktionalität zueinander passen müssen. Weiter stark einschränkend hinsichtlich der Verwendung von möglichen antiadhäsiven Substanzen wirkt die Anforderung, dass diese Verbindungen ohne ein Pre-Blending im Extruder verarbeitet werden können, was hinsichtlich der Darreichungsform und den erforderlichen Anlagen weitere Einschränkungen ergibt.

Ebenfalls für Trennfolien/-papiere, insbesondere für Babywindelanwendungen, wird in US 5,700,571 A eine Releaseschicht beschrieben, die durch Cocast- oder Coextrusionsverfahren auf einer Polyolefinschicht erzeugt wird, wobei die Oberflächenschicht aus einem Gemisch eines Polyolefins und einer darin dispergierten Releasesubstanz wie Carbamide oder Carbamate besteht. Die Erfindung zielt nur auf Folienträger, nicht aber auf Verbundträgersysteme mit Textilien.

In einer Serie von Patentanmeldungen, beispielsweise der DE 34 22 302 A1, werden Klebebändern aus biaxial orientierten Polypropylenfolien mit einer coextrudierten Deckschicht beschrieben, wobei die in der Deckschicht eingesetzten antiadhäsiven Substanzen bevorzugt Polydiorganosiloxane sind. Auch hier werden nur Folienträger beschrieben.

Aufgabe der Erfindung ist es, ein kostengünstiges Trägermaterial insbesondere für ein Klebeband, ganz insbesondere Selbstklebeband, mit einem Verbundträger aus einem textilen Flächengebilde und einer Kunststofffolie herzustellen, wobei dieser Verbundträger auf der freien Kunststofffolienoberfläche eine Releasebeschichtung aufweist, das die geschilderten Nachteile des Standes der Technik nicht oder nicht in dem Maße zeigt.

Gelöst wird diese Aufgabe durch ein Trägermaterial, wie es im Hauptanspruch dargelegt ist. Gegenstand der Unteransprüche sind vorteilhafte Fortbildungen des Erfindungsgegenstandes. Des Weiteren betrifft die Erfindung Verwendungsvorschläge des erfindungsgemäßen Trägermaterials.

Demgemäß betrifft die Erfindung ein Trägermaterial insbesondere für ein Klebeband mit einem textilen Träger, auf dessen obere Seite eine erste Kunststofffolie extrudiert ist, auf deren obere, dem textilen Träger gegenüberliegende Seite eine zweite Kunststofffolie extrudiert ist, die antiadhäsive Eigenschaften aufweist.

Gemäß einer vorteilhaften Ausführungsform der Erfindung sind die erste Kunststofffolie und die zweite Kunststofffolie coextrudiert.

Mit der Coextrusion lassen sich zwei- oder gegebenenfalls mehrschichtige Folien herstellen, wobei sich die Schichten gravierend in ihrer Zusammensetzung und ihren Eigenschaften unterscheiden können.

Bei der erfindungsgemäß vorgeschlagenen Coextrusion der beiden Kunststofffolien wird gemäß einer weiteren vorteilhaften Weiterbildung der Erfindung die erste Kunststofffolie als dickere PE-Folie extrudiert, während die zweite dünner erzeugt wird.
Dominiert die erste Kunststofffolie stark in der Dicke gegenüber der zweiten Kunststofffolie, zum Beispiel mit einem Verhältnis von 10:1 und mehr, werden durch die erste Kunststofffolie die wesentlichen mechanischen Eigenschaften des Coextrudats bestimmt. Diese entsprechen im Idealfall denen der reinen PE-Folien, die bisher zum Einsatz kommen.

Da die zweite Kunststofffolie aufgrund ihrer Releaseeigenschaften in der Regel teurer ist verglichen mit den Polymeren der ersten Kunststofffolie, ist das Dickenverhältnis vorzugsweise mit einem starken Übergewicht zur ersten Kunststofffolie auszulegen. Prinzipiell sind jedoch auch gleich dicke Schichten oder dickere zweite Kunststofffolien möglich und werden daher nicht grundsätzlich ausgeschlossen.

Die erste Kunststofffolie kann prinzipiell beidseitig auf das Textil aufgebracht werden. Aus Kosten- und Eigenschaftsgründen wird eine einseitige Beschichtung bevorzugt. Ebenso ist es möglich, auch die zweite Kunststofffolie beidseitig aufzubringen.

Der Begriff "textiler Träger" beziehungsweise "textiles Flächengebilde" umfasst sowohl Gewebe, Gewirke, Gestricke, Gelege, Bänder, Geflechte, Abstandsgewirke, Nähwirkstoffe, Nadelflortextilien und Filze, die zum Teil aus Garnen hergestellt werden, als auch nichtgewebte Faservliese oder Vliesstoffe aus Fasern (nonwovens). Als Fasermaterialien kommen grundsätzlich alle für die Herstellung von Textilien üblicherweise eingesetzten Fasermaterialien in Betracht. Hierzu zählen Baumwolle, Wolle, Hanffaser, Sisalfasern, Flachs, Ramie, Polyacrylnitril, Polyesterfasern, Polyamidfasern, Viskose, Seide, Acetatfasern, Triacetatfasern, Aramidfasern und dergleichen.

Als textile Grundträger, auf die die mindestens zweilagige Kunststofffolie durch Coextrusion aufgebracht ist, werden bevorzugt Gewebe oder Gewirke gewählt, jedoch können auch andere Maschenwaren, Gelege, Vliesstoffe, Nähvliesstoffe und dergleichen verwendet werden. Durch geeignete Wahl des Garnmaterials, der Garnstärke sowie der Fadendichte lassen sich viele Eigenschaften des Trägermaterials und der daraus bevorzugt hergestellten Klebebänder maßschneidern. Beispielsweise führt die Verwendung von Polyamid- oder Kevlargarnen zu hochfesten Produkten. Für die universellen General Purpose- (GP-)Gewebebänder werden jedoch aus Kostengründen sehr offene Gewebe oder Kett-Gewirke aus dünnen Baumwoll-, Viskose und Polyestergarnen oder Mischungen daraus bevorzugt. Typische Fadendichten liegen bei 20 bis 150 mesh, wobei preiswerte Massenprodukte wie die Duct Tapes oder die japanischen Verpackungsbänder meist Fadendichten von 25 bis 75 mesh aufweisen (als "mesh" wird in diesem Zusammenhang die Summe der Fäden pro inch in Kettrichtung [warp - machine direction] und Schussrichtung [weft - cross direction] verstanden). In erfinderischem Sinn sind alle die genannten Gewebe einsetzbar. Bei richtiger Wahl von geeigneten, nicht zu dicken Garnen wird ein GP-Selbstklebeband erhalten, dass leicht ohne besondere Hilfsmittel wie Messer oder Schere per Hand in Querrichtung durchzureißen ist. Diese für GP-Selbstklebebänder wichtige Eigenschaft wird weiter verbessert durch die erfindungsgemäße Beschichtung mit einer geschlossenen Kunststofffolie. Die Fäden des Textils werden so geometrisch fixiert und lassen sich bei dem Durchreißvorgang leicht nacheinander durchtrennen, ohne sich zu verschieben. Dies bedeutet einen gleichmäßigen Kraftaufwand über die Reißlänge ohne lokale Verdickungen, die höhere Durchreißkräfte erfordern würden.

Als Werkstoff für die erste Kunststofffolie bieten sich Polyethylen an.

Die gesamte Kunststoffbeschichtung aus der ersten und der zweiten Kunststofffolie weist gemäß einer bevorzugten Ausführungsform der Erfindung eine Dicke zwischen 0,025 bis 0,3 mm auf, wobei für Sonderanwendungen auch Dicken bis 1 mm möglich sind. In Anlehnung an die Duct Tapes werden jedoch bevorzugt Dicken von 0,05 bis 0,2 mm realisiert.

Die zweite Kunststofffolie, die über die gesamte Fläche fest mit der ersten Kunststofffolie verbunden ist, sollte aus Kostengründen die dünnere Schicht darstellen. Bevorzugt beträgt die Dicke nur den 10. bis 50. Teil der Gesamtdicke.
In Absolutwerten werden 1 bis 10 µm angestrebt, wobei Schichtdicken um 5 µm einen guten Kompromiss aus technischer Machbarkeit, Eigenschaften und Kosten darstellen.

Die antiadhäsive Wirkung der zweiten Kunststofffolie wird über spezielle Substanzen erreicht. Diese können als Reinsubstanz in dünnen Schichten oder abgemischt aufgetragen werden. Bei einer Kristallinität von ca. 50 % und höher weist HDPE selbst bereits leichte Releaseeigenschaften auf. Dies ist auch von VLDPE-Typen mit Dichten von ≤ 0,9 g/cm³ nach WO 97/35719 bekannt.
Die zweite Kunststofffolie besteht aus derartigen Polyolefinen.

Gemäß einer weiteren vorteilhaften Weiterbildung der Erfindung werden wegen der gewünschten guten Verbundhaftung zwischen der ersten und der zweiten Kunststofffolie und wegen der angestrebten mittleren Releaseeigenschaften für die bevorzugten GP-Selbstklebebänder Abmischungen von antiadhäsiven Verbindungen mit einem polymeren Matrixmaterial verwendet. Hierbei kann die Polymermatrix aus demselben Polymeren bestehen wie die erste Kunststofffolie, dass heißt bevorzugt Polyethylen. Bei Verwendung von Polyethylen in beiden Schichten können sich diese in der Zusammensetzung, im Schmelzindex MFI und/oder Dichte unterscheiden.

Als antiadhäsive Substanzen sind prinzipiell alle Verbindungen möglich, die sich in die Polymermatrix einmischen und zusammen extrudieren lassen, die per se eine ausreichende antiadhäsive Wirkung gegen die später vorteilhafterweise zu beschichtende Selbstklebemassen haben und die ausreichend stabil sind, den Herstellprozess mit seinen Druck-, Temperatur-, Verweilzeitanforderungen zu durchlaufen. Hier ist vor allem auf möglichst hohe thermische Stabilität sowie niedrige Dampfdrücke zu achten, damit bei den hohen Temperaturen der Coextrusion von 200 °C und mehr die Wirksubstanzen funktionsfähig erhalten bleiben. Für die Funktionalität in der bevorzugten späteren Anwendung auf der Klebebandrolle ist auf eine ausreichende Verträglichkeit der antiadhäsiven Substanzen in der Polymermatrix und/oder auf geeignete Molmassen/Dampfdrücke zu achten, so dass keine oder eine nur geringe Migrationsneigung dieser Substanzen aus der Deckschicht in die Umgebung, insbesondere auf oder in die Klebemasseschicht, gewährleistet ist.

Generell können als antiadhäsive Substanzen in der Deckschicht alle gängigen Arten von Releasekomponenten gegenüber Selbstklebemassen zum Einsatz kommen: Silikone und Derivate, Verbindungen mit teil- und vollständiger Fluorierung, Verbindungen mit langkettigen Kohlenwasserstoff(seiten)ketten, bekannt als Derivate der verschiedenen Öl- oder Fettsäuren.

Neben Polysiloxanen wie beispielsweise oligomeren und polymeren Polydimethylsiloxanen können auch Reaktionsprodukte mit entsprechenden Silanen verwendet werden. Insbesondere seitenkettengepfropfte Polymere sind geeignet. Das polymere Rückgrat bestimmt die Eigenschaften wie Stabilität, Verträglichkeit, die Seitenketten ergeben die gewünschte Releaseeigenschaften. Beispielhaft sei in diesem Zusammenhang mit den PE-beschichteten GP-Selbstklebebändern das Lubotene® der Firma Optatech zu nennen, ein LDPE mit langkettigem Silikon in der Seitenkette.

Auch teil- oder perfluorierte Oligomere/Polymere können bei entsprechenden Eigenschaften als antiadhäsive Substanzen in der zweiten Kunststofffolie Verwendung finden. Die wirksamen CF₂-Gruppierungen können in Haupt- oder Seitenkette lokalisiert sein, wobei in der Seitenkette bereits antiadhäsive Effekte ab einer Kettenlänge von 5 Kohlenstoffen spürbar sind.

Weitere Substanzklassen, die sich als antiadhäsive Komponenten in der zweiten Kunststofffolie eignen, sind beispielsweise Amidwachse, oligomere oder polymere Reaktionsprodukte von Fettaminen wie zum Beispiel N,N-Ethylen-bis-stearylamid (EBS) oder Hexamethylen-diamino-distearat und Derivate davon sowie die bekannten und weit verbreiteten Polyvinylstearylcarbamate (PVSC), wobei weitergehend allgemein Reaktionsprodukte mit langkettigen Kohlenwasserstoffseitenketten ab einer KohlenstoffKettenlänge von 12, bevorzugt jedoch 16 bis 18, an einem polymeren Hauptstrang (backbone) als mögliche antiadhäsive Substanzen geeignet sind. Neben den N-alkylcarbamaten sind dies auch N-alkyl-carbamide und Verbindungen ähnlicher Struktur. Das Rückgratpolymer als Hauptstrang kann sowohl aus reinen Kohlenwasserstoffsegmenten ohne Funktionalität in der Kette, aber auch aus einer Kette mit Heteroatomen, Doppelbindungen und dergleichen bestehen, die gegebenenfalls als Anknüpfungspunkte für die Seitenketten über polymeranaloge Reaktionen dienen können.

Im Regelfall, je nach Wirksamkeit und dem angestrebten antiadhäsiven Verhalten, enthält die zweite Kunststofffolie gewichtsmäßig 0,1 bis 50 Gew.-% von der Releasekomponente, bevorzugt aus Kosten- und Eigenschaftsgründen 1 bis 10 Gew.-%. Diese Menge kann entweder bei der Coextrusionsbeschichtung direkt dem Extruder zugeführt und eingemischt werden oder aber als Masterbatch vorher separat hergestellt werden.

Bei der Extrusionsbeschichtung des textilen Trägers, insbesondere des Gewebes mit der bevorzugten PE-Schicht wird über eine Coextrusionsdüse die zweite Kunststofffolie mit normalerweise 5 bis 10 µm Dicke gleichzeitig aufgebracht. Für gute Dickenhomogenität der Coex-Schicht ist auf möglichst ähnliche Viskositäten der beiden Polymerschmelzen für die erste und zweite Kunststofffolie zu achten, für gute Verbundhaftung der beiden Folien sind geeignete Verträglichkeiten und/oder ähnlicher chemischer Aufbau der Substanzen wichtig.

Die Extrusionstemperatur richtet sich nach den verwendeten Substanzen, ihren Schmelzverhalten sowie ihren thermischen Stabilitäten. Über die Extrusionstemperatur und damit über die Viskosität der Polymerschmelze lassen sich auch das Eindringverhalten der ersten Kunststofffolie in das offene Textil steuern. Dünnflüssiges Polymer, offene Textilstrukturen und Druck beispielsweise über eine mitlaufende Walze führen zu einem stärkeren Eindringen der Folie in das Textil und bewirken damit eine stärkere Haftung durch mechanische Verbundbildung.

Für die PE-Coextrusionsbeschichtung mit einer zweiten Kunststofffolie kann auf die Erfahrungen von normalen PE-Beschichtungen zurückgegriffen werden. Je nach Schmelzindex, Dichte, Molekulargewicht des Polymeren sind Extrusionstemperaturen von 250 bis 330 °C gängig.

Um eine farbige Kunststoffbeschichtung auf dem Textil und damit später bevorzugte farbige Selbstklebebänder zu erzeugen, können bei der Coextrusion Farbpigmente oder Farbstoffe verwendet werden, so dass die Kunststoffbeschichtung entweder transparent, farbig und durchsichtig oder opak, farbig und deckend ist.
Je nach Farbpigmenten, Anspruch an Farbtiefe und Kostensituation können derartige Einfärbungen in beiden Folien der Coextrusion, nur in der ersten oder nur in der zweiten Kunststofffolie vorgenommen werden.

Derartige Verbundträger aus einem Textil und einer mit einer antiadhäsiven zweiten Kunststofffolie versehene erste Kunststofffolie, insbesondere aus PE, stellen geeignete und kostengünstige Trägermaterialien für Selbstklebebänder dar.
Auf die textile Seite des Verbundträgers wird mit den gängigen Beschichtungsverfahren wie Düsen oder Walzen für lösemittelfreie Klebemassen oder mit Rakel-, Rasterwalzen- oder Gießsystemen für gelöste oder dispergierte Klebemassen die klebende Ausrüstung durchgeführt. Für die genannten GP-Gewebeklebebänder werden hierbei bevorzugt lösemittelfreie Kautschukklebemassen, die mit Harzen und Weichmachern tackig und stark klebend rezeptiert sind, mit einem Masseauftrag von 70 bis 300 g/m², bevorzugt mit 100 bis 200 g/m², verwendet.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Gemäß einer bevorzugten Ausführungsform der Erfindung wird das Trägermaterial zumindest partiell ein- oder beidseitig mit einem Klebstoff auf Synthese- oder Naturkautschuk- oder Acrylatbasis beschichtet, bevorzugt ein druckempfiridlicher und/oder ein selbstklebender. Geeignete Haftkleber sind des Weiteren bei D. Satas, Handbook of Pressure Sensitive Adhesive Technology (Van Nostrand Reinhold) beschrieben.

Die Beschichtung kann in Form eines oder mehrerer Streifen erfolgen, sie ist insbesondere aber vollflächig.

Die Klebemasse kann physikalisch, thermisch, chemisch und/oder ESH vernetzt sein, vorzugsweise chemisch.

Geeignet ist eine Klebemasse auf Acrylathotmelt-Basis, auf Lösemittelbasis oder auf wässriger Basis erwiesen, wobei erstere einen K-Wert (gemessen jeweils in 1 Gew.-%iger Lösung in Toluol, 25 °C) von mindestens 20 aufweisen kann, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Beispielsweise sei konkret der folgende Kleber beschrieben, der hervorragend geeignet ist.

### Polymer 1

Ein für radikalische Polymerisationen konventioneller 200 L-Reaktor wird mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten mit Stickstoffgas unter Rühren wird der Reaktor auf 58.°C hochgeheizt und 40 g 2,2'-Azoisobuttersäurenitril (AIBN) hinzugegeben. Anschließend wird das äußere Heizbad auf 75 °C erwärmt und die Reaktion konstant bei dieser Außentemperatur durchgeführt. Nach 1 h Reaktionszeit wird wiederum 40 g AIBN hinzugegeben. Nach 5 h und 10 h wird mit jeweils 15 kg Aceton/Isopropanol (95:5) verdünnt. Nach 6 und 8 h werden jeweils 100 g Dicyclohexylperoxydicarbonat (Perkadox 16®, Firma Akzo Nobel) gelöst in jeweils 800 g Aceton hinzugegeben. Die Reaktion wird nach 24 h Reaktionszeit abgebrochen und auf Raumtemperatur abgekühlt.

### Acrylathaftklebemasse 1

Das Polymer 1 wird mit Siedegrenzenbenzin 60/95 auf einen Feststoffgehalt von 30 % herunterverdünnt. Anschließend werden 25 Gew.-% (bezogen auf den Mengenanteil Polymer 1) Kolophoniumharz (Glycerylester) Foral® 85 (Eastman Chemical) und 0,3 Gew.-% (bezogen auf den Mengenanteil Polymer 1) Aluminium-(III)-acetylacetonat (als 3 %-ige Lösung in Isopropanol) hinzugerührt und komplett gelöst.
Anschließend wird aus Lösung mit zum Beispiel einem Kommarakel auf das Substrat beschichtet und für 10 Minuten bei 120 °C getrocknet.

Die bevorzugt transparente Klebemasse kann verstärkt sein durch mineralische Fasern wie vorzugsweise Glaserfasern, Kohlenstofffasern und/oder Kunststofffasern, insbesondere aber Glasfasern.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbem, Lichtschutz-, Alterungsschutzmitteln, Vernetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder Comonomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können, sowie weitere, wie sie in Ullmanns Enzyklopädie der technischen Chemie, Band 12, Seiten 525 bis 555 (4. Auflage), Weinheim, aufgeführt sind. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Abschließend sei erwähnt, dass auch auf Polyurethan basierende Kleber geeignet sind.

Die Ausrüstung mit der antiadhäsiven zweiten Kunststofffolie erlaubt nicht nur ein leichtes Abrollen der großen Originalballen zum Schneiden in Rollen in den geforderten Verkaufsabmessungen, sondern auch späterhin für den Endverbraucher ein leichtes Abrollen der Klebebandrollen bei der Verwendung. Hinsichtlich der späteren Anwendung kann über die Art des antiadhäsiven Additivs sowie über den Anteil in der zweiten Kunststofffolie die Abrollkraft in gewissen Bereichen eingestellt werden.

Es war Gegenstand von Untersuchungen, ob auf eine separate Releaselackierung von Trägern in Klebebändern mit notwendigen Trocknungs- beziehungsweise Vernetzungsprozessen verzichtet und inwieweit diese besser in andere Fertigungsschritte integriert werden kann.
Überraschenderweise zeigte sich, dass bei der Extrusion der äußeren Folie die notwendige antiadhäsive Eigenschaft auf der Folienoberfläche erzeugt werden kann, ohne dass diese Folie gesondert lackiert werden muss.
Diese Funktion kann des Weiteren mit der Extrusionsbeschichtung eines textilen Trägers kombiniert werden, so dass Schließen des Gewebes, Verbundbildung zwischen Textil und Folie sowie antiadhäsive Ausrüstung der Folie in einem Arbeitsschritt zeit- und Kosten sparend erfolgt.

Die Verwendung von zwei- oder mehrlagigen Schichten, insbesondere aus PE, mit inhärenter antiadhäsiver Wirkung in der zweiten Kunststofffolie für Trägersysteme, die aus textilen Trägern wie Geweben, Gewirken, Gelegen etc. durch Coextrusionsbeschichtung als Verbunde hergestellt werden und in universellen Selbstklebebändern Verwendung finden, ist neu.

Das erfindungsgemäße Trägermaterial kann vorteilhaft also als Träger in einem Klebeband, das zur Ummantelung eines Kabelbaums in einem Kraftfahrzeug eingesetzt wird, verwendet werden oder als Träger in einem Duct Tape (Universalklebeband, Panzerband, Industrieklebeband).

Das folgende Beispiel soll dazu dienen, die Erfindung zu veranschaulichen, ohne sie einzuschränken zu wollen.

### Beispiel (nicht erfindungsgemäß)

Ein offenes, leichtes Gewebe von 34 mesh (24 Fäden/inch in der Kette und 10 Fäden/inch im Schuss) mit einem BW-PET-Mischgarn von 40 den in der Kette wird mit einer PE-Coexfolie von 70 g/m² beschichtet. Als Basisdeckschicht dient mit einem Anteil von 90 % Flächenmasse ein LDPE, wobei der MFI den Gegebenheiten der Extrusionanlage gemäß gewählt wird. Als zweite, äußere Kunststofffolie wird auf dasselbe LDPE als Polymermatrix zurückgegriffen, jedoch als Masterbatch mit 5 % eines handelsüblichen, hochmolekularen Polyvinylstearylcarbamats. Beide Schichten erhalten durch Zugabe eines Farbmasterbatches die gewünschte Einfärbung. Durch geeignete Temperaturführung und Pressdruck der Kühlwalze wird ein teilweises Eindringen der PE-Schmelze in das Gewebe erreicht, so dass nach dem Abkühlen ein stabiler Verbund aus Gewebe und Coexfolie erhalten wird.
Dieser Verbundträger wird in einem Folgeschritt mit 120 g/m² einer gängigen harzabgemischten, lösemittelfreien Synthesekautschukklebemasse beschichtet und zu verkaufsfähigen Rollen geschnitten.

Trotz der hohen Klebkraftwerte lassen sich die abschließend erhaltenen Rollen mit Abrollkräften von 3 bis 5 N/cm gut und gleichmäßig abrollen. Das Klebeband weist weiterhin die geforderte gute Quereinreißbarkeit per Hand auf.

## Patentansprüche

1. Trägermaterial insbesondere für ein Klebeband mit einem textilen Träger, auf dessen obere Seite eine erste Kunststofffolie extrudiert ist, auf deren obere, dem textilen Träger gegenüberliegende Seite eine zweite Kunststofffolie extrudiert ist, die antiadhäsive Eigenschaften aufweist, wobei
die erste Kunststofffolie aus Polyethylen und
die zweite Kunststofffolie aus HDPE oder VLDPE besteht,
**dadurch gekennzeichnet, dass**
die zweite Kunststofffolie aus einer Polymermatrix besteht, in die antiadhäsive Verbindungen eingebracht sind.

2. Trägermaterial nach Anspruch 1, **dadurch gekennzeichnet, dass** die erste Kunststofffolie und die zweite Kunststofffolie coextrudiert sind.

3. Trägermaterial nach Anspruch 1 oder 2, **dadurch gekennzeichnet, dass** zwischen der ersten Kunststofffolie und der zweiten Kunststofffolie weitere Kunststofffolien vorhanden sind, die vorzugsweise in einer einzigen Extrusion auf den textilen Träger aufgebracht werden.

4. Trägermaterial nach zumindest einem der Ansprüche 1 bis 3, **dadurch gekennzeichnet, dass** die erste Kunststofffolie eine größere Dicke aufweist als die zweite, so dass vorzugsweise ein Dickenverhältnis von zumindest 10:1 vorliegt.

5. Trägermaterial nach zumindest einem der vorherigen Ansprüche, **dadurch gekennzeichnet, dass** die erste Kunststofffolie eine Dicke aufweist von 0,025 bis 0,3 mm und/oder die zweite eine Dicke von 1 bis 10 µm.

6. Trägermaterial nach zumindest einem der vorherigen Ansprüche, **dadurch gekennzeichnet, dass** die erste Kunststofffolie aus Low Density Polyethylen (LDPE) besteht.

7. Trägermaterial nach Anspruch 1, **dadurch gekennzeichnet, dass** als antiadhäsive Substanzen Silikone und Derivate, Verbindungen mit teil- und vollständiger Fluorierung, Verbindungen mit langkettigen Kohlenwasserstoffseitenketten, bekannt als Derivate der verschiedenen Öl- oder Fettsäuren, teil- oder perfluorierte Oligomere/polymere, Amidwachse, oligomere oder polymere Reaktionsprodukte von Fettaminen wie N,N-Ethylen-bis-stearylamid (EBS) oder Hexamethylen-diamino-distearat und Derivate davon und/oder Polyvinylstearylcarbamate (PVSC) eingesetzt werden.

8. Trägermaterial nach Anspruch 1 oder 7, **dadurch gekennzeichnet, dass** die antiadhäsiven Substanzen zu 0,1 bis 50 Gew.-% der zweiten Kunststofffolie beigesetzt sind.

9. Verwendung eines Trägermaterials nach zumindest einem der vorherigen Ansprüche als Träger in einem ein- oder beidseitig, zumindest partiell klebend ausgerüsteten Klebeband, vorzugsweise Selbstklebeband.

10. Verwendung eines Trägermaterials nach zumindest einem der vorherigen Ansprüche als Träger in einem Klebeband, das zur Ummantelung eines Kabelbaums in einem Kraftfahrzeug eingesetzt wird.

11. Verwendung eines Trägermaterials nach zumindest einem der vorherigen Ansprüche als Träger in einem Duct Tape (Universalklebeband, Panzerband, Industrieklebeband).

## Claims

1. Support material, in particular for an adhesive tape comprising a textile support, on the upper side of which a first plastic film is extruded, on the upper side of which opposite the textile support a second plastic film which has antiadhesive properties is extruded,
the first plastic film consisting of polyethylene and
the second plastic film consisting of HDPE or VLDPE,
**characterized in that**
the second plastic film consists of a polymer matrix into which the antiadhesive compounds are introduced.

2. Support material according to Claim 1, **characterized in that** the first plastic film and the second plastic film are coextruded.

3. Support material according to Claim 1 or 2, **characterized in that** further plastic films which are preferably applied in a single extrusion onto the textile support are present between the first plastic film and the second plastic film.

4. Support material according to at least one of Claims 1 to 3, **characterized in that** the first plastic film has a greater thickness than the second plastic film, so that a thickness ratio of at least 10:1 is preferably present.

5. Support material according to at least one of the preceding claims, **characterized in that** the first plastic film has a thickness of 0.025 to 0.3 mm and/or the second plastic film has a thickness of 1 to 10 µm.

6. Support material according to at least one of the preceding claims, **characterized in that** the first plastic film consists of low density polyethylene (LDPE).

7. Support material according to Claim 1, **characterized in that** silicones and derivatives, compounds having partial and complete fluorination, compounds having long hydrocarbon side chains known as derivatives of the various oleic or fatty acids, partly fluorinated or perfluorinated oligomers/polymers, amide waxes, oligomeric or polymeric reaction products of fatty amines, such as N,N-ethylenebisstearylamide (EBS) or hexamethylene diaminodistearate and derivatives thereof and/or polyvinylstearyl carbamates (PVSC) are used as antiadhesive substances.

8. Support material according to Claim 1 or 7, **characterized in that** the antiadhesive substances are added in an amount of 0.1 to 50% by weight to the second plastic film.

9. Use of a support material according to at least one of the preceding claims as a support in an adhesive tape, preferably self-adhesive tape, treated on one or both sides so as to be at least partly adhesive.

10. Use of a support material according to at least one of the preceding claims as a support in an adhesive tape which is used for surrounding a cable tree in a motor vehicle.

11. Use of a support material according to at least one of the preceding claims as a support in a duct tape (universal adhesive tape, tank tape, industrial adhesive tape).

## Revendications

1. Matériau de support en particulier pour un ruban adhésif comportant un support textile, sur la face supérieure duquel est extrudé un premier film en matière plastique, sur la face supérieure, opposée au support textile, duquel est extrudé un deuxième film en matière plastique qui présente des propriétés antiadhésives,
le premier film en matière plastique étant constitué de polyéthylène et
le deuxième film en matière plastique étant constitué de HDPE (polyéthylène haute densité) ou de VLDPE (polyéthylène très basse densité),
**caractérisé en ce que** le deuxième film en matière plastique est constitué d'une matrice polymère dans laquelle sont introduits les composés antiadhésifs.

2. Matériau de support selon la revendication 1, **caractérisé en ce que** le premier film en matière plastique et le deuxième film en matière plastique sont coextrudés.

3. Matériau de support selon la revendication 1 ou 2, **caractérisé en ce qu'**entre le premier film en matière plastique et le deuxième film en matière plastique sont présents d'autres films en matière plastique, qui sont appliqués de préférence en une seule extrusion sur le support textile.

4. Matériau de support selon au moins l'une des revendications 1 à 3, **caractérisé en ce que** le premier film en matière plastique présente une plus forte épaisseur que le deuxième, de sorte que de préférence un rapport d'épaisseurs d'au moins 10:1 est présent.

5. Matériau de support selon au moins l'une des revendications précédentes, **caractérisé en ce que** le premier film en matière plastique présente une épaisseur de 0,025 à 0,3 mm et/ou le deuxième présente une épaisseur de 1 à 10 µm.

6. Matériau de support selon au moins l'une des revendications précédentes, **caractérisé en ce que** le premier film en matière plastique est constitué de Low Density Polyethylen (LDPE).

7. Matériau de support selon la revendication 1, **caractérisé en ce qu'**on utilise comme substances antiadhésives des silicones et dérivés, des composés à fluoration partielle ou totale, des composés à longues chaînes latérales hydrocarbonées, connus en tant que dérivés des divers acides gras ou oléiques, des oligomères/polymères partiellement ou perfluorés, des cires de type amide, des produits de réaction oligomères ou polymères d'amines grasses comme le N,N-éthylène-bis-stéarylamide (EBS) ou l'hexaméthylène-diaminodistéarate et des dérivés de ceux-ci et/ou des polyvinylstéarylcarbamates (PVSC).

8. Matériau de support selon la revendication 1 ou 7, **caractérisé en ce que** les substances antiadhésives sont ajoutées à raison de 0,1 à 50 % en poids au deuxième film en matière plastique.

9. Utilisation d'un matériau de support selon au moins l'une des revendications précédentes, en tant que support dans un ruban adhésif, de préférence un ruban autoadhésif, monoface ou double face, au moins partiellement doté de propriétés collantes.

10. Utilisation d'un matériau de support selon au moins l'une des revendications précédentes, en tant que support dans un ruban adhésif qui est utilisé pour le gainage d'un faisceau de câbles dans un véhicule automobile.

11. Utilisation d'un matériau de support selon au moins l'une des revendications précédentes, en tant que support dans un Duct Tape (ruban adhésif universel, ruban de cerclage, ruban adhésif industriel).
